# EUROPEAN PATENT SPECIFICATION

(11) **EP 3 804 456 B1**
(45) Date of publication and mention of the grant of the patent: **18.12.2024**
(21) Application number: 19735649.6
(22) Date of filing: 29.05.2019
(51) Int. Cl.: H04W 84/22, H04L 12/40, H04L 12/46

(54) **INTEGRATION METHOD AMONG DATA COMMUNICATION NETWORKS WITH WIRELESS MESH AND CAN BUS TECHNOLOGY**
INTEGRATIONSVERFAHREN ZWISCHEN DATENKOMMUNIKATIONSNETZWERKEN MIT DRAHTLOSER MESH- UND CAN-BUS-TECHNOLOGIE
PROCÉDÉ D'INTÉGRATION PARMI DES RÉSEAUX DE COMMUNICATION DE DONNÉES AVEC MAILLAGE SANS FIL ET TECHNOLOGIE DE BUS CAN

(30) Priority: 04.06.2018 IT 201800006001
(43) Date of publication of application: 14.04.2021
(73) Proprietor: Norel S.r.l., 10099 San Mauro Torinese (TO) (IT)
(72) Inventor: LOMBARDO, Mauro, 10099 SAN MAURO TORINESE (TO) (IT); MORI, Alberto, 10099 SAN MAURO TORINESE (TO) (IT); MORO, Andrea, 10099 SAN MAURO TORINESE (TO) (IT); LAMAESTRA, Salvatore, 10099 SAN MAURO TORINESE (TO) (IT)
(74) Representative: Garavelli, Paolo
(86) International application number: PCT/IT2019/000040
(87) International publication number: WO 2019/234773

(56) References cited:
- WO-A1-2008/127657
- US-A1- 2009 323 578
- US-A1- 2016 094 398
- US-B1- 6 735 630

## Description

### Field of application

The present invention refers to an integration method among data communication networks with wireless mesh and CAN bus technology.

In general, the present invention refers to arrangements for the connection between networks with different transmission means.

In particular, the present invention refers to the connection between wireless mesh networks and CAN, Controller Area Network, bus networks, to be used in the transmission of digital information.

### Background of the invention

There currently are several technologies which allow the data communication between different objects in local metropolitan environments. Each technology is substantially based on a single transmitting means, either a bus, and therefore copper wired, or wireless, with any typology.

Examples of wireless technologies are: ZigBee, Z-Wave, Bluetooth, LoRa, SigFox, while examples of bus-based technologies are: CAN, Konnex, C-Bus, X-10.

Each of these standards, usually proprietary and more or less protected by patents, has its own strong points. Among these, Konnex, abbreviated as KNX, currently the most widespread one, provides for the simultaneous use of many transmitting means. However, its wireless part provides for point-to-point connections and not for the use of a mesh topology. Moreover, implementing a wireless-only network is not advisable even by the official documentation, KNX Basics: "Theoretically KNX RF could allow all technology in a building to be controlled wirelessly, but this will remain the exception rather than the rule".

The prior art is given by patent application WO 2012/125169 A1 dealing with the WirelessHART standard, a data radiofrequency, wireless transmission technology, developed to allow the creation of a self-organizing and self-healing mesh data transmission network. The WirelessHART network on 2-4GHz ISM band through a radio standard IEEE 802.15.4 allows replacing the classic field bus in the process automation field, and is currently widespread with millions of active devices. Through the cable-based HART connection, the WirelessHART network allow the point-to-point or point-to-multipoint bidirectional communication between devices connected with a classic 4-20 mA interface in a master-slave configuration.

Patent application WO 2012/125169 A1 discloses a possible device, adaptor, to integrate a WirelessHART device in a normal HART wired network, through two communication interfaces, a wireless one and a wired one, an exchange memory and a processor. However, the interconnection of sensors and transducers in an industrial environment only with a HART protocol is a limit of the invention.

Moreover, the prior art is given by EP-B12.022.236, which deals with a gateway, in a wired network of wireless devices for process control, to allow the passage from wireless mode to wired mode for data coming from sensors. A physical phenomenon can give rise to different measures summarized in an object marked by an identifier, object identifier.

Each object is associated with a parameter which defines the particular variable to which reference must be made. However, the mainly unidirectional feature of the system, namely the passage from wireless mode to wired mode and not vice versa, is a limit of the invention.

A further limit of the invention is given by its target referred to the industrial environment of process control, rather than a generic data transmission.

In spite of these efforts, there remain the need of extending the concept of integration to the generic field of data transmission systems, with particular reference to the interconnection between wireless mesh and CAN bus systems.

US-A1-2009/323578, WO-A1-2008/127657, US-A1-2016/094398 and US-B1-6 735 630 disclose prior art integration methods.

### Summary of the invention

Object of the present invention is solving the above prior art problems, by providing a reliable connecting system for a data transmission network which allows a complete integration between at least to data networks with different typology and nature.

A further object is making an hybrid data communication system which enables the coexistence, in the same network infrastructure, of wireless and wired modes, without giving privilege to any one.

A further object is making an hybrid data communication system which enables the coexistence, in the same network infrastructure, of areas covered by wireless nodes with mesh topology and of areas served by a physical bus on a copper wire.

A further object is providing a common methodology for a hybrid wireless-wired interfacing wherein a gateway belonging to the hybrid system is not an essential component for the correct operation of the telecommunication network.

The above and other objects and advantages of the invention, as will result from the following description, are obtained with a method for integrating between at least one data communication network with wireless mesh technology and at least one data communication network with CAN bus technology, as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears in the enclosed claims.

Currently there is not, on the market, a system similar to the disclosed one. The Konnex bus itself provides for a wireless extension, with basic, non-mesh functionalities, but its use is clearly not advisable every time it is possible to use a wired network.

The present invention allows extending the adoption of the wireless mesh technology to all those cases in which, for a limited number of nodes with important reliability requirements, it has not yet been possible to take it into account.

A key point of the invention, differently from the existing prior art, is the absence of privileged nodes, gateways, and of any other form of centralization, a guarantee of reliability and resilience of the network at maximum possible levels.

These features have been reached without imposing particular design constraints on wireless mesh protocols, and exploiting the proven reliability and sturdiness features of a bus, the CAN bus, which has been used for years with profits in the automotive sector.

### Description of the drawings

The present invention will be better described by some preferred embodiments thereof, provided as a non-limiting example, with reference to the enclosed drawings, in which:
Figure 1 shows a diagram of a first embodiment of the integrating system among data communication networks with wireless mesh and CAN bus technology according to the present invention; and
Figure 2 shows a diagram of a second embodiment of the integrating system among data communication networks with wireless mesh and CAN bus technology according to the present invention.

### Description of preferred embodiments

With reference to the Figure, it is possible to note that an integration between at least one data communication network with wireless mesh technology and at least one data communication network with CAN bus technology is performed in at least one data communication system comprising:
(1) at least one data communication network with wireless mesh technology comprising at least one radio node 105, 106 with a radiofrequency interface;
(2) at least one data communication network with CAN bus technology comprising at least one wired node 103, 104 with a cable interface on CAN bus;
(3) at least one hybrid node 101, 102 interposed between the data communication network with wireless mesh technology and the data communication network with CAN bus technology;
(4) a bus 100 which provides a data transport service to all nodes which integrate a wired interface.

The at least one hybrid node 101, 102, is equipped with at least one radiofrequency interface RF for a data communication with at least the radio node 105, 106 and with at least one wired interface on CAN bus for a data communication with at least the wired node 103, 104. Moreover, each hybrid node 101, 102 transmits and receives information according to an integration protocol of mesh and wired functionalities.

Advantageously, an integrating method between at least one data communication network with wireless mesh technology and at least one data communication network with CAN bus technology comprises the following steps:
- when at least one first hybrid node 101, 102 receives at least one message from at least one wired node 103, 104 and/or from at least one radio node 105, 106, and/or from at least one second hybrid node 101, 102 and the message is not addressed to the first hybrid node 101, 102, the at least one first hybrid node 101, 102 can re-transmit the message to at least one other wired node 103, 104 and/or to at least one other radio node 105, 106, and/or to at least one other hybrid node 101, 102;
- when at least one first hybrid node 101, 102 receives a message from at least one wired node 103, 104 and/or from at least one radio node 105, 106, and/or from at least one second hybrid node 101, 102 and the message is addressed to the first hybrid node 101, 102, the first hybrid node 101, 102 does not re-transmit the message.

Starting from one of the following conditions:
- at least one hybrid node 101, 102 generates at least one new message sent on CAN bus and/or on RF radio channel;
- at least one wired node 103, 104 generates at least one new message sent on CAN bus;
- at least one radio node 105, 106 generates at least one new message sent on RF radio channel;
the method comprises the following steps:
a) when a radio node 105, 106 receives on radio channel a message not exclusively addressed to the radio node 105, 106, the radio node 105, 106 makes the message suitable to be re-transmitted on radio channel;
b) when a hybrid node 101, 102 receives on radio channel a message not exclusively addressed to the hybrid node 101, 102, the hybrid node 101, 102 makes the message suitable to be re-transmitted on radio channel and on CAN bus;
c) when a wired node 103, 104 receives on CAN bus a message not exclusively addressed to the wired node 103, 104, the wired node 103, 104 discards and does not further process the message;
d) when a hybrid node 101, 102 receives on CAN bus a message not exclusively addressed to the hybrid node 101, 102, the hybrid node 101, 102 makes the message suitable to be re-transmitted on the radio channel only;
e) when a radio node 105, 106 receives on radio channel a message of which it is a single addressee, the radio node 105, 106 processes the contents of the message and does not further transmit it;
f) when a hybrid node 101, 102 receives on radio channel a message of which it is a single addressee, the hybrid node 101, 102 processes the contents of the message and does not further transmit it;
g) when a wired node 103, 104 receives on CAN bus a message of which it is a single addressee, the wired node 103, 104 processes the contents of the message and does not further transmit it;
h) when a hybrid node 101, 102 receives on CAN bus a message of which it is a single addressee, the hybrid node 101, 102 processes the contents of the message and does not further transmit it.

Moreover, the method comprises the step of actually transmitting a message defined as suitable to be re-transmitted when the following conditions simultaneously occur:
i) the same message has not been previously dealt with;
j) in the previous step b), and related only to the suitability to a transmission on CAN bus, for a hybrid node 101, 102 which receives on radio channel a message not exclusively addressed to the hybrid node 101, 102, during a wait in a queue for the re-transmission on CAN bus, the same message does not arrive also on the CAN bus interface;
k) in the previous step d), and related only to the suitability to a transmission on radio channel, for a hybrid node 101, 102 which receives on CAN bus channel a message not exclusively addressed to the hybrid node 101, 102, during a wait in a queue for the re-transmission on radio channel, the same message does not arrive also on the radio interface;
l) all additional conditions for the retransmission which are posed by the upper protocol levels are also verified.

In case of simultaneous application of several steps, for each interface the non-transmission condition prevails on the transmission condition.

The method finally comprises a step wherein any data packet or group of packets is tracked through a hash code, a univocal counter or other systems, to allow a unique treatment of each data packet or group of packets, both for the nodes with at least a wire interface CAN and for the nodes with at least a wireless interface RF discarding or differently treating the already previously treated data packet or group of packets.

### Examples

An integrating system between data communication networks with wireless mesh and CAN bus technology deals with a plurality of electronic devices adapted to receive and transmit information through at least one RF radio channel and a CAN wired channel.

A mixed data transmission network composed of lengths with a radio channel with RF mesh technology and of lengths with a channel wired on CAN bus is a single entity.

The integration protocol of mesh and wired functionalities allows assigning to every information which transits on the bus a univocal address identifier associated with a node with a cable interface on CAN bus.

The univocal identifier is composed of a physical address of the node with a cable interface on CAN bus or of a value univocally derived from the physical address of the node with a cable interface on CAN bus.

A sequence of information is tracked through a hash code, a univocal counter or other systems, to enable the uniqueness of the treatment of each information, both the node with a cable interface on CAN bus and the node with an interface through RF radio discarding the previously treated information.

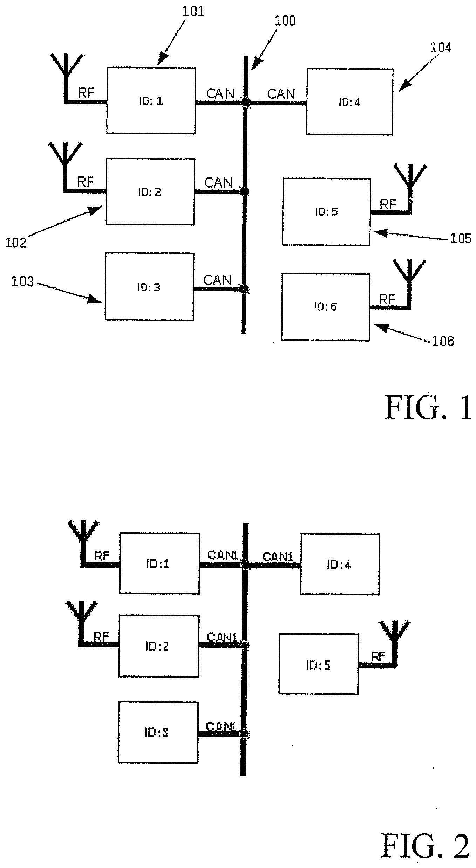

With reference to Figure 2, according to a further embodiment of the reliable connecting system for a data transmission network, a mixed data transmission network is composed of lengths with a RF radio channel and of lengths with a wired CAN channel, the lengths with a wired CAN channel mutually connected through at least one hybrid node with a radiofrequency interface and a cable interface on bus to allow interchanging messages between networks with different transmitting means.

According to a third embodiment of the reliable connecting system for a data transmission network, not shown, a wired CAN channel is equipped with a connection of two RF domains to allow the connectivity of all present nodes, even if belonging to different domains of a RF radio channel, each of the different domains of a RF radio channel being a delimited portion of space in which the radiofrequency emitted by all hybrid and RF radio nodes contained therein cannot be received by other nodes placed outside it.

The reliable connecting system for a data transmission network of the present invention is called CANMESH.

The basic idea is the extension of a wireless data communication system wireless with mesh topology to a wired transmitting means which can replace, where required, the weak spots of the radiofrequency data transmission.

A typical example of use of the system is an installation inside a condominium for managing the part of common electric users, such as stair illumination, lift, etc.

It is clear that the whole illumination part can be managed through radio with great savings when installing the plant. A possibile lack of switching-on due to disturbances on the radio channel does not bring about safety problems, and if it takes the character of a sporadic phenomenon, it is not perceived as a problem by a customer.

Vice versa, the connection of the lift part, in oaddition to necessarily have requirements of high reliability, cannot be subjected to lack of activations, not even sporadically, because, in addition to clear safety reasons, this event could generate anxiety for users and at the least induce to call the maintenance service. It is clear that the compulsory choice for this type of application is the wired one.

The present invention allows exploiting the advantages of the wireless mesh technology, allowing at the same time to connect in a network also systems which, due to reliability and safety reasons, could never be managed through radio. Also the lift part can therefore be part of the network plant, thereby allowing to implement some useful functions, such as, for example, the automatic switch-on of the stair lights when opening the lift doors.

The data packages coming from the wired bus are re-sent on the wireless part in a whoolly transparent way and vice versa, allowing the complete integration of the functionalities.

Take into account a network of teledata communication composed of several nodes, each of which distinguished by a univocal address. The term node means anz electronic object capable of receiving and transmitting information through a radio channel and/or a CAN bus, indipendently from the transmission rate, the CPU power and the complexity of the card in general.

With reference to a typical installation, composed of six nodes and shown in Figure 1, the following are thereby located:
- two hybrid nodes (101, 102) each of which communicates with the rest of the plant through two interfaces, a radiofrequency interface and a cable interface on CAN bus;
- two wired nodes (103, 104) each of which communicates with the rest of the plant through a CAN bus;
- two RF nodes (105, 106) each of which communicates with the rest of the plant through a radiofrequency connection and an antenna;
- a CAN bus (100) which provides the data transport service to all nodes which integrate a wired interface.

All nodes equipped with RF transceiver adopt a data transceiving system with mesh tecnology and implement an algorithm which decides when retransmitting a message received but not addressed thereto.

The behaviour of each node under the different operatine conditions depends on its typology. Table 1 summarizes all operating conditions for each type of node and the consequent actions performed on the communication channel available.

This set of rules allows the full integration of the mesh functionality with the wired one on CAN bus, limiting to a minimum indispensable the occupation of the transmitting means. For a correct interpretation of what the table contains, it can be noted that:
1. the sender knows the physical affress of the addressee or sends the message in broadcast, to all possible listeners and not to one in particular, but does not necessarily have information about the placement of the addressee in the network; in particular, a sender node does not know a priori whether the addressee is on the wireless section or on the wired section;
2. a sender node does not know a priori whether the addressee node is on, off or disconnected;
3. the advanced arbitration features of the CAN bus are exploited to free the processor from managing the access to the wired transmitting means; in particular, many nodes can try to simultaneously send on the bus the same identical message, but this does not create bus conflicts, since the collisions are automatically solved by assigning univocal messagge identifiers for each transceiving element, connected to the bus.

Regarding this latter aspect, a possible, not the single, solution to assign to the messages generated on bus from every particular node a univocal identifier consists in using as CAN ID the MAC address of the node or a value univocally derived therefrom.

**Table 1**

| ***N*** | ***Event*** | ***Node*** | ***RF side*** | ***CAN side*** |
|---|---|---|---|---|
| 1 | The node generates a message | Wired | - | sends |
| 2 | | RF | sends | - |
| 3 | | hybrid | sends | sends |
| 4 | The node receives on RF a message broadcast or addressed to other nodes | wired | - | - |
| 5 | | RF | sends | - |
| 6 | | hybrid | sends | sends |
| 7 | The node receives on CAN a message broadcast or addressed to other nodes | wired | - | does not send |
| 8 | | RF | - | - |
| 9 | | hybrid | sends | does not send |
| 1 0 | The node receives on RF a message addressed thereto | wired | - | - |
| 1 1 | | RF | does not send | - |
| 1 2 | | hybrid | does not send | does not send |
| 1 3 | The node receives on CAN bus a message addressed thereto | wired | - | does not send |
| 1 4 | | RF | - | - |
| 1 5 | | hybrid | does not send | does not send |

Where more table lines are simultaneously applicable, the "does not send" status prevails on "sends", as explained in the examples below.

Each message can be treated with the above listed modes only once. This can be obtained by keeping track of an adequate number of the latest messages processed through a hash code, a univocal counter or other methods. If a node receives a racket already previously treated, it discards the packet without further processing.

The given examples does not provide for the case of routing the packet and refer to a routing of the flooding type. Any other routing algorithm comprises a subset of the listed cases.

For a better understanding, a text description now follows for some of the cases listed in the table, with reference to the network topology shown in Figure 1 and the number of line of Table 1 (included in the first column).

Example 1. The hybrid node 102 generates a message M1 addressed to the RF node 105:
- the node 102 sends simultaneously on RF and on CAN bus the message M1 (line 3). The CAN ID is set equal to the node ID, namely 2;
- the message sent on bus is received and discarded by the nodes 103 and 104, after having checked that the addressee address (contents inside the packet M1) does not coincide with its own (line 7) ;
- for the node 101 three cases can occur:
   1. it receives the message M1 first on the radio channel and then on CAN: after having checked that the addressee address does not non coincide with its own, it re-transmits the message on RF and on CAN (line 6); afterwards, it discards the message M1 which receives on CAN because already previously treated;
   2. it receives the message M1 first on radio channel and then on CAN: after having checked that the addressee address does not non coincide with its own, it re-transmits the message on RF and on CAN (line 6); while the message is waiting for re-transmission on CAN, an identical one is received, coming from 102: at that time, the node understands that the message M1 has already been broadcast on bus, and then it cancels the message from its own transmission queue (line 9);
   3. it receives the message M1 first on CAN and then on radio channel: after having checked that the addressee address does not non coincide with its own, it re-transmits the message on RF but not on CAN (line 9); afterwards, it discards the message M1 which arrives on RF because already previously treated: of all cases, this is the most likely one;
- the node 106 receives on radio channel, directly from 101 or through one or more hops, the packet M1; at that time:
   1. if the packet has not been previously treated, after having checked that the addressee address does not non coincide with its own, it re-transmits the message on RF (line 5);
   2. if the packet has already been treated previously, it is discarded;
- the node 105 receives on radio channel, directly or through one or more hops of the network mesh, the packet M1 and, after having checked which is the actual addressee, it suitably process it.

Example 2. The node RF 106 generates a message M2 addressed to the wired node 103. It must be noted that, since there is not a direct connection, the presence of hybric nodes is necessary, which allow sending the data packets:
- the node RF 106 sends on RF the message M2 (line 2);
- the node RF 105 receives on radio channel, directly from 106 or through one or more hops, the packet M2; at that time:
   1. if the packet has not been previously treated, after having checked that the addressee address does not non coincide with its own, it re-transmits the message on RF (line 5);
   2. if the packet has already been previously treated, it is discarded;
- for the hybrid node 101, four cases can occur:
   1. it receives the message M2 on radio channel; after having checked that the addressee address does not non coincide with its own, it re-transmits the message on RF and on CAN (line 6);
   2. it receives the message M2 first on radio channel and then on CAN from 102: after having checked that the addressee address does not non coincide with its own, it re-transmits the message on RF and on CAN (line 6); afterwards, it discards the message M2 which receives on CAN because already previously treated;
   3. it receives the message M2 first on radio channel and then on CAN from 102: after having checked that the addressee address does not non coincide with its own, it re-transmits the message on RF and on CAN (line 6); while the message is waiting for re-transmission on CAN, an identical one is received: at that time, the node understands that the message M2 has already been broadcast on bus, and then it cancels the message from its own transmission queue (line 9);
   4. it receives the message M2 first on CAN from 102 and then on radio channel: after having checked that the addressee address does not non coincide with its own, it re-transmits the message on RF but not on CAN (line 9); afterwards, it discards the message M2 which arrives on RF because already previously treated;
- for the hybrid node 102, the same considerations with respect to 101 are valid;
- the wired node 104 receives and discards the message sent on bus from one of the hybrid nodes after having checked that the addressee address does not non coincide with its own (line 7) ;
- the wired node 103 receives on bus the packet M2 and, after having checked which is the actual addressee, it suitably process the packet without sending it.

In case of simultaneous application of several steps, for each interface the non-transmission condition prevails on the transmission one, as disclosed in Example 3.

Example 3. A hybrid node receives on radio channel a message not exclusively addressed thereto: the hybrid node makes the message suitable to be re-transmitted on radio channel and on CAN bus and inserts the message in the re-transmission queues of the radio channel and of the CAN bus. While the message is waiting for re-transmission on CAN bus, on the same bus an identical one is received, coming from another node. At that time, it is necessary to apply also the rule according to which a hybrid node which receives on CAN bus a message not exclusively addressed thereto, it makes the message suitable to be re-transmitted only on the radio channel. Since the non-transmission condition prevails on the transmission one, the node removes the message from the transmission queue on CAN bus and re-transmits it only on the radio channel.

Extension to several wired lengths. The concepts in the previous paragraphs can be extended without changes to a mixed network composed of many RF lengths and many wired lengths.

As shown in Figure 2, the wired lengths are mutually connected through one or more hybrid nodes which allow the interchange of messages on radiofrequency. The concepts expressed in the previous paragraphs are applied unchanged.

Extension to several RF domains. The term RF domain means a delimited portion, even ideally, of space in which the radiofrequency emitted from all hybrid/RF nodes contained therein cannot be received by other nodes placed outside.

A CAN bus can be used to mutually connect one or more RF domains in order to allow the connectivity of all nodes being present, even if belonging to different RF domains. In such case, the concepts expressed in the previous paragraphs are applied unchanged.

General case. The most general case is a network which comprises many wired lenghts and many RF domains. When an enough number of nodes of the previously listed type are applied, the network can be considered a single entity to which all above listed techniques apply.

The above-described method allows improving the global network performances, limiting to a necessary minimum the processing of a data packet or group of packets already previously received and processed. In addition to increasing the global efficiency of the transmitting means, such technique further allows reducing the minimum requirements (CPU time and memory) which the hardware of the single node must have to be an integral part of the network.

The invention further deals with a method as described above, designed to allow an association of a single node to at least one or more private networks simultaneously, in order to act as information interchange node between the above private networks and thereby reducing the number of nodes necessary for such purpose.

## Claims

1. Method for integrating between at least one data communication network with wireless mesh technology and at least one data communication network with CAN bus technology, in at least one data communication system comprising:
(1) at least one data communication network with wireless mesh technology comprising at least one radio node (105, 106) with a radiofrequency interface;
(2) at least one data communication network with CAN bus technology comprising at least one wired node (103, 104) with a cable interface on CAN bus;
(3) at least one hybrid node (101, 102) interposed between said data communication network with wireless mesh technology and said data communication network with CAN bus technology;
(4) a bus (100) which provides a data transport service to all nodes which integrate at least one wired interface;
said at least one hybrid node (101, 102) being equipped with at least one radiofrequency interface (RF) for a data communication with at least said radio node (105, 106) and with at least one wired interface on bus (CAN) for a data communication with at least said wired node (103, 104), each hybrid node (101, 102) being adapted to transmit and receive information according to an integration protocol of mesh and wired functionalities, the method comprising the following steps:
- when at least one first hybrid node (101, 102) receives at least one message from at least one wired node (103, 104) and/or from at least one radio node (105, 106) and/or from at least one second hybrid node (101, 102) and said message is not addressed to said first hybrid node (101, 102), said first hybrid node (101, 102) can re-transmit the message to at least one other wired node (103, 104) and/or to at least one other radio node (105, 106) and/or to at least one other hybrid node (101, 102);
- when at least one first hybrid node (101, 102) receives a message from at least one wired node (103, 104) and/or from at least one radio node (105, 106) and/or from at least one second hybrid node (101, 102) and said message is addressed to said first hybrid node (101, 102), said first hybrid node (101, 102) does not re-transmit said message; and
- any data packet or group of packets is tracked through a hash code, a univocal counter or other systems, to allow a unique treatment of each data packet or group of packets, both for the nodes with at least a wire interface (CAN) and for the nodes with at least a wireless interface (RF) discarding or differently treating the already previously treated data packet or group of packets,
wherein starting from one of the following conditions:
- at least one hybrid node (101, 102) generates at least one new message sent on bus (CAN) and/or on radio channel (RF);
- at least one wired node (103, 104) generates at least one new message sent on bus (CAN);
- at least one radio node (105, 106) generates at least one new message sent on radio channel (RF) ;
the following steps are included:
a) when a radio node (105, 106) receives on radio channel a message not exclusively addressed to said radio node (105, 106), said radio node (105, 106) makes said message suitable to be re-transmitted on radio channel;
b) when a hybrid node (101, 102) receives on radio channel a message not exclusively addressed to said hybrid node (101, 102), said hybrid node (101, 102) makes said message suitable to be re-transmitted on radio channel and on CAN bus;
c) when a wired node (103, 104) receives on CAN bus a message not exclusively addressed to said wired node (103, 104), said wired node (103, 104) discards and does not process said message further;
d) when a hybrid node (101, 102) receives on CAN bus a message not exclusively addressed to said hybrid node (101, 102), said hybrid node (101, 102) makes said message suitable to be re-transmitted only on the radio channel;
e) when a radio node (105, 106) receives on radio channel a message of which it is a single addressee, said radio node (105, 106) processes the contents of said message and does not further transmit it;
f) when a hybrid node (101, 102) receives on radio channel a message of which it is a single addressee, said hybrid node (101, 102) processes the contents of said message and does not further transmits it;
g) when a wired node (103, 104) receives on CAN bus a message of which it is a single addressee, said wired node (103, 104) processes the contents of said message and does not further transmit it;
h) when a hybrid node (101, 102) receives on CAN bus a message of which it is a single addressee, said hybrid node (101, 102) processes the contents of said message and does not further transmit it;
the method further comprising the step of actually transmitting a message defined as suitable to be re-transmitted when the following conditions simultaneously occur:
i) the same message has not been previously dealt with;
j) in the previous step b), and related to the sole suitability to a transmission on CAN bus, for a hybrid node (101, 102) which receives on radio channel a message not exclusively addressed to said hybrid node (101, 102), during a wait in a queue for the re-transmission on CAN bus, the same message does not arrive also on the CAN bus interface;
k) in the previous step d), and related to the sole suitability to a transmission on radio channel, for a hybrid node (101, 102) which receives on CAN bus channel a message not exclusively addressed to said hybrid node (101, 102), during a wait in a queue for the re-transmission on radio channel, the same message does not arrive also on the radio interface;
l) all additional conditions are checked for the re-transmission which are imposed by the upper protocol levels;
wherein, in case of simultaneous application of several steps, for each interface the non-transmission condition prevails on the transmission condition.

2. Method according to claim 1, wherein a single node is connected to multiple wired CAN and/or wireless MESH networks simultaneously, acting as information interchange node between the above networks

## Patentansprüche

1. Verfahren zur Integration zwischen mindestens einem Datenkommunikationsnetzwerk mit Wireless-Mesh-Technologie und mindestens einem Datenkommunikationsnetzwerk mit CAN-Bus-Technologie, in mindestens einem Datenkommunikationssystem, umfassend:
(1) mindestens ein Datenkommunikationsnetzwerk mit drahtloser Mesh-Technologie, das mindestens einen Funkknoten (105, 106) mit einer Hochfrequenzschnittstelle umfasst;
(2) mindestens ein Datenkommunikationsnetzwerk mit CAN-Bus-Technologie, das mindestens einen kabelgebundenen Knoten (103, 104) mit einer Kabelschnittstelle am CAN-Bus umfasst;
(3) mindestens einen Hybridknoten (101, 102), der zwischen dem Datenkommunikationsnetzwerk mit drahtloser Mesh-Technologie und dem Datenkommunikationsnetzwerk mit CAN-Bus-Technologie liegt;
(4) einen Bus (100), der allen Knoten, die mindestens eine drahtgebundene Schnittstelle integrieren, einen Datentransportdienst bereitstellt;
wobei der mindestens eine Hybridknoten (101, 102) mit mindestens einer Hochfrequenzschnittstelle (RF) für die Datenkommunikation mit mindestens dem Funkknoten (105, 106) und mit mindestens einer drahtgebundenen Schnittstelle auf dem Bus (CAN) ausgestattet ist Datenkommunikation mit mindestens dem drahtgebundenen Knoten (103, 104), wobei jeder Hybridknoten (101, 102) in der Lage ist, Informationen gemäß einem Mesh- und drahtgebundenen Funktionalitätsintegrationsprotokoll zu senden und zu empfangen, wobei das Verfahren die folgenden Schritte umfasst:
- wenn mindestens ein erster Hybridknoten (101, 102) mindestens eine Nachricht von mindestens einem drahtgebundenen Knoten (103, 104) und/oder von mindestens einem Funkknoten (105, 106) und/oder von mindestens einem empfängt Wenn ein zweiter Hybridknoten (101, 102) die Nachricht nicht an den ersten Hybridknoten (101, 102) adressiert, kann der erste Hybridknoten (101, 102) die Nachricht an mindestens einen anderen kabelgebundenen Knoten (103, 104) erneut übertragen, und/oder zu mindestens einem anderen Funkknoten (105, 106) und/oder zu mindestens einem anderen Hybridknoten (101, 102);
- wenn mindestens ein erster Hybridknoten (101, 102) eine Nachricht von mindestens einem drahtgebundenen Knoten (103, 104) und/oder von mindestens einem Funkknoten (105, 106) und/oder von mindestens einem zweiten Hybridknoten empfängt Knoten (101, 102) und die Nachricht an den ersten Hybridknoten (101, 102) adressiert ist, sendet der erste Hybridknoten (101, 102) die Nachricht nicht erneut; und
- Jedes Datenpaket oder jede Paketgruppe wird mithilfe eines Hash-Codes, eines eindeutigen Zählers oder anderer Systeme verfolgt, um die Eindeutigkeit der Behandlung jedes Datenpakets oder jeder Paketgruppe zu ermöglichen, beides für Knoten mit mindestens einer Kabelschnittstelle (CAN), sowohl für Knoten mit mindestens einer drahtlosen Schnittstelle (RF), indem das Datenpaket oder die Gruppe von Paketen, die bereits zuvor behandelt wurden, verworfen oder auf andere Weise behandelt werden
wobei ausgehend von einer der folgenden Bedingungen:
- mindestens ein Hybridknoten (101, 102) generiert mindestens eine neue Nachricht, die auf dem Bus (CAN) und/oder auf dem Funkkanal (RF) gesendet wird;
- mindestens ein kabelgebundener Knoten (103, 104) generiert mindestens eine neue Nachricht, die auf dem Bus (CAN) gesendet wird;
- mindestens ein Funkknoten (105, 106) generiert mindestens eine neue Nachricht, die auf dem Funkkanal (RF) gesendet wird;
folgende Phasen sind enthalten:
a) wenn ein Funkknoten (105, 106) eine Nachricht auf dem Funkkanal empfängt, die nicht ausschließlich an den Funkknoten (105, 106) adressiert ist, macht der Funkknoten (105, 106) die Nachricht für die erneute Übertragung auf dem Funkkanal geeignet;
b) wenn ein Hybridknoten (101, 102) eine Nachricht auf dem Funkkanal empfängt, die nicht ausschließlich an den Hybridknoten (101, 102) adressiert ist, macht der Hybridknoten (101, 102) die Nachricht für die erneute Übertragung auf dem Funkkanal geeignet und auf dem Bus CAN;
c) wenn ein verkabelter Knoten (103, 104) eine Nachricht auf dem CAN-Bus empfängt, die nicht ausschließlich an den verkabelten Knoten (103, 104) adressiert ist, verwirft der verkabelte Knoten (103, 104) die Nachricht und verarbeitet sie nicht weiter;
d) wenn ein Hybridknoten (101, 102) eine Nachricht auf dem CAN-Bus empfängt, die nicht ausschließlich an den Hybridknoten (101, 102) gerichtet ist, macht der Hybridknoten (101, 102) die Nachricht nur für die erneute Übertragung auf dem Funkkanal geeignet;
e) wenn ein Funkknoten (105, 106) eine Nachricht auf dem Funkkanal empfängt, dessen einziger Empfänger er ist, verarbeitet der Funkknoten (105, 106) den Inhalt der Nachricht und sendet sie nicht weiter;
f) wenn ein Hybridknoten (101, 102) eine Nachricht auf dem Funkkanal empfängt, dessen einziger Empfänger er ist, verarbeitet der Hybridknoten (101, 102) den Inhalt der Nachricht und sendet sie nicht weiter;
g) wenn ein kabelgebundener Knoten (103, 104) eine Nachricht auf dem CAN-Bus empfängt, dessen einziger Empfänger er ist, verarbeitet der kabelgebundene Knoten (103, 104) den Inhalt der Nachricht und sendet sie nicht weiter;
h) wenn ein Hybridknoten (101, 102) eine Nachricht auf dem CAN-Bus empfängt, dessen einziger Empfänger er ist, verarbeitet der Hybridknoten (101, 102) den Inhalt dieser Nachricht und sendet ihn nicht weiter,
das Verfahren umfasst weiterhin die Phase des tatsächlichen Sendens einer Nachricht, die als für eine erneute Übertragung geeignet definiert ist, wenn die folgenden Bedingungen gleichzeitig auftreten:
i) die gleiche Nachricht wurde noch nicht bereits bearbeitet;
j) in der vorherigen Phase b) und nur in Bezug auf die Eignung zur Übertragung auf dem CAN-Bus für einen Hybridknoten (101, 102), der auf dem Funkkanal eine Nachricht empfängt, die nicht ausschließlich an den Hybridknoten (101, 102) gerichtet ist ) kommt während des Wartens in der Warteschlange für die erneute Übertragung auf dem CAN-Bus dieselbe Nachricht nicht auch auf der CAN-Bus-Schnittstelle an;
k) in der vorherigen Phase d) und nur in Bezug auf die Eignung zur Übertragung auf dem Funkkanal für einen Hybridknoten (101, 102), der auf dem CAN-Bus-Kanal eine Nachricht empfängt, die nicht ausschließlich an den Hybridknoten (101, 102) adressiert ist, 102) während des Wartens in der Warteschlange für die erneute Übertragung auf dem Funkkanal kommt dieselbe Nachricht nicht auch auf der Funkschnittstelle an;
l) alle zusätzlichen Bedingungen für die Neuübertragung, die von den höheren Protokollebenen festgelegt werden, werden überprüft;
wobei bei gleichzeitiger Anwendung verschiedener Phasen für jede Schnittstelle der Nichtübertragungszustand Vorrang vor dem Übertragungszustand hat.

2. Verfahren nach Anspruch 1, bei dem ein einzelner Knoten gleichzeitig mit einer Vielzahl von kabelgebundenen CAN- und/oder drahtlosen MESH-Netzwerken verbunden ist und als Informationsaustauschknoten zwischen den oben genannten Netzwerken fungiert.

## Revendications

1. Procédé d'intégration entre au moins un réseau de communication de données à technologie maillée sans fil et au moins un réseau de communication de données à technologie bus CAN, dans au moins un système de communication de données comprenant:
(1) au moins un réseau de communication de données avec une technologie maillée sans fil comprenant au moins un noeud radio (105, 106) avec une interface radiofréquence;
(2) au moins un réseau de communication de données avec technologie de bus CAN comprenant au moins un noeud câblé (103, 104) avec une interface de câble sur le bus CAN;
(3) au moins un noeud hybride (101, 102) interposé entre ledit réseau de communication de données avec une technologie maillée sans fil et ledit réseau de communication de données avec une technologie de bus CAN;
(4) un bus (100) qui fournit un service de transport de données à tous les noeuds qui intègrent au moins une interface filaire;
ledit au moins un noeud hybride (101, 102) étant équipé d'au moins une interface radiofréquence (RF) pour la communication de données avec au moins ledit noeud radio (105, 106) et d'au moins une interface filaire sur bus (CAN) pour communication de données avec au moins ledit noeud filaire (103, 104), chaque noeud hybride (101, 102) étant capable de transmettre et de recevoir des informations selon un protocole d'intégration de fonctionnalités maillées et filaires, ledit procédé comprenant les étapes suivantes:
- lorsqu'au moins un premier noeud hybride (101, 102) reçoit au moins un message d'au moins un noeud filaire (103, 104) et/ou d'au moins un noeud radio (105, 106) et/ou d'au moins un deuxième noeud hybride (101, 102) et ledit message n'est pas adressé audit premier noeud hybride (101, 102), ledit premier noeud hybride (101, 102) peut retransmettre le message à au moins un autre noeud filaire (103, 104). et/ou à au moins un autre noeud radio (105, 106) et/ou à au moins un autre noeud hybride (101, 102);
- lorsqu'au moins un premier noeud hybride (101, 102) reçoit un message d'au moins un noeud filaire (103, 104) et/ou d'au moins un noeud radio (105, 106) et/ou d'au moins un deuxième noeud hybride noeud (101, 102) et ledit message est adressé audit premier noeud hybride (101, 102), ledit premier noeud hybride (101, 102) ne retransmet pas ledit message; et
- tout paquet de données ou groupe de paquets est suivi à l'aide d'un code de hachage, d'un compteur unique ou d'autres systèmes, pour permettre l'unicité du traitement de chaque paquet de données ou groupe de paquets, aussi bien pour les noeuds dotés d'au moins une interface câble (CAN), à la fois pour les noeuds dotés d'au moins une interface sans fil (RF) en rejetant ou en traitant de manière différente le paquet de données ou le groupe de paquets déjà traité précédemment
dans lequel à partir de l'une des conditions suivantes:
- au moins un noeud hybride (101, 102) génère au moins un nouveau message envoyé sur le bus (CAN) et/ou sur le canal radio (RF);
- au moins un noeud filaire (103, 104) génère au moins un nouveau message envoyé sur le bus (CAN);
- au moins un noeud radio (105, 106) génère au moins un nouveau message envoyé sur le canal radio (RF);
les phases suivantes sont incluses:
a) lorsqu'un noeud radio (105, 106) reçoit un message sur le canal radio non adressé exclusivement audit noeud radio (105, 106), ledit noeud radio (105, 106) rend ledit message apte à une retransmission sur le canal radio;
b) lorsqu'un noeud hybride (101, 102) reçoit un message sur le canal radio non adressé exclusivement audit noeud hybride (101, 102), ledit noeud hybride (101, 102) rend ledit message apte à une retransmission sur le canal radio et sur le bus CAN;
c) lorsqu'un noeud câblé (103, 104) reçoit un message sur le bus CAN non adressé exclusivement audit noeud câblé (103, 104), ledit noeud câblé (103, 104) rejette et ne traite plus ledit message;
d) lorsqu'un noeud hybride (101, 102) reçoit un message sur le bus CAN non adressé exclusivement audit noeud hybride (101, 102), ledit noeud hybride (101, 102) rend ledit message apte à une retransmission sur le canal radio uniquement;
e) lorsqu'un noeud radio (105, 106) reçoit un message sur le canal radio dont il est le seul destinataire, ledit noeud radio (105, 106) traite le contenu dudit message et ne le transmet plus;
f) lorsqu'un noeud hybride (101, 102) reçoit un message sur le canal radio dont il est le seul destinataire, ledit noeud hybride (101, 102) traite le contenu dudit message et ne le transmet plus;
g) lorsqu'un noeud filaire (103, 104) reçoit un message sur le bus CAN dont il est le seul destinataire, ledit noeud filaire (103, 104) traite le contenu dudit message et ne le transmet plus;
h) lorsqu'un noeud hybride (101, 102) reçoit un message sur le bus CAN dont il est le seul destinataire, ledit noeud hybride (101, 102) traite le contenu dudit message et ne le transmet plus,
le procédé comprenant en outre la phase de transmission effective d'un message défini comme étant apte à la retransmission lorsque les conditions suivantes se produisent simultanément:
i) le même message n'a pas déjà été traité précédemment;
j) dans la phase précédente b), et portant uniquement sur l'aptitude à la transmission sur le bus CAN, pour un noeud hybride (101, 102) qui reçoit un message sur le canal radio non adressé exclusivement audit noeud hybride (101, 102), lors de l'attente en file d'attente de retransmission sur le bus CAN, le même message n'arrive pas également sur l'interface du bus CAN;
k) dans la phase précédente d), et portant uniquement sur l'aptitude à la transmission sur le canal radio, pour un noeud hybride (101, 102) qui reçoit un message sur le canal bus CAN non adressé exclusivement audit noeud hybride (101, 102), lors de l'attente dans la file d'attente de retransmission sur le canal radio, le même message n'arrive pas également sur l'interface radio;
l) toutes les conditions supplémentaires de retransmission fixées par les niveaux de protocole supérieurs sont vérifiées;
dans lequel, en cas d'application simultanée de différentes phases, pour chaque interface la condition de non-transmission prévaut sur la condition de transmission.

2. Procédé selon la revendication 1, dans lequel un seul noeud est connecté simultanément à une multiplicité de réseaux CAN filaires et/ou MESH sans fil, faisant office de noeud d'échange d'informations entre les réseaux précités.
